(19) Europäisches Patentamt
European Patent Office
Office européen des brevets

(11) Veröffentlichungsnummer: **0 578 164 A2**

(12) **EUROPÄISCHE PATENTANMELDUNG**

(21) Anmeldenummer: **93110706.4**

(51) Int. Cl.5: **C08G 69/32**

(22) Anmeldetag: **05.07.93**

(30) Priorität: **08.07.92 DE 4222390**

(43) Veröffentlichungstag der Anmeldung:
**12.01.94 Patentblatt 94/02**

(84) Benannte Vertragsstaaten:
**AT CH DE DK ES FR GB IE IT LI NL**

(71) Anmelder: **HOECHST AKTIENGESELLSCHAFT**

**D-65926 Frankfurt(DE)**

(72) Erfinder: **Miess, Georg-Emerich, Dr.**
**Widmannweg 12**
**D-93049 Regensburg(DE)**
Erfinder: **Heinrich, Karl**
**Karwendelstrasse 2**
**D-86845 Grossaitingen(DE)**
Erfinder: **Klein, Peter, Dr.**
**Fasanenweg 13**
**D-65205 Wiesbaden(DE)**

# (54) Aromatische Copolyamide, Verfahren zu ihrer Herstellung und daraus geformte Gebilde.

(57) Beschrieben werden in organischen Polyamid-Lösungsmitteln lösliche aromatische Copolyamide enthaltend mindestens 95 Mol%, bezogen auf das Polymere, an wiederkehrenden Struktureinheiten der Formeln I, II und III

$-R^1-NH-R^3-NH-$ (I),

$-R^1-NH-R^4-NH-$ (II),

$-R^1-NH-R^5-NH-$ (III),

worin ein Teil aller Reste $R^1$ eine Gruppe der Formel $-OC-R^2-CO-$ darstellt, worin $R^2$ ein zweiwertiger aromatischer Rest ist, dessen Valenzbindungen sich in para oder in vergleichbarer koaxialer oder paralleler Stellung zueinander befinden und worin ein weiterer Teil aller Reste $R^1$ eine Gruppe der Formel IV und/oder V bedeuten

```
 O                    O
 ||                   ||
-P-        (IV),     -P-R7-CO-   (V),
 |                    |
 R6                   R8
```

worin $R^6$ einen Alkyl-, Cycloalkyl- oder Arylrest bedeutet, $R^7$ einen Alkylen-, Cycloalkylen- oder Arylenrest bedeutet, und $R^8$ einen Alkyl-, Cycloalkyl- oder Arylrest bedeutet, und worin die Menge der Reste der Formel IV und/oder V innerhalb eines Polymermoleküls so gewählt wird, das der Phosphorgehalt 0,1 bis 0,5 Gew.%, bezogen auf das Polymere, beträgt,
worin $R^3$ einen zweiwertigen aromatischen Rest darstellt, dessen Valenzbindungen sich in para oder in

EP 0 578 164 A2

vergleichbarer koaxialer oder paralleler Stellung zueinander befinden,
worin $R^4$ einen Rest der Formel VI darstellt

$-Ar^1-X-Ar^2-$ (VI),

worin $Ar^1$ und $Ar^2$ unabhängig voneinander einen zweiwertigen aromatischen Rest darstellen, dessen Valenzbindungen sich in para oder in vergleichbarer koaxialer oder paralleler Stellung zueinander befinden, oder worin $Ar^2$ zusätzlich einen zweiwertigen aromatischen Rest darstellt, dessen Valenzbindungen sich in meta- oder in vergleichbarer gewinkelter Position zueinander befinden, und X eine Gruppe der Formel -O-, -S-, $-SO_2-$, -O-Phenylen-O- oder Alkylen ist, und worin $R^5$ eine der für $R^3$ und $R^4$ definierten Bedeutungen annimmt aber von dem jeweils gewählten Rest $R^3$ und $R^4$ eines Moleküls abweicht.

Die neuen aromatischen Copolyamide lassen sich zu geformten Gebilden, wie Fasern, verarbeiten, die sich durch ausgezeichnete mechanische Eigenschaften, wie hohe Festigkeiten, und einen verbesserten LOI-Wert auszeichnen.

Die vorliegende Erfindung betrifft neue aromatische Copolyamide mit hoher Festigkeit und verbesserter wärmebeständigkeit, ein angepaßtes Verfahren zu ihrer Herstellung und daraus geformte Gebilde, insbesondere Fasern aus diesen Copolymeren.

Aromatische Polyamide, sogenannte Aramide, sind an sich bekannt. Es ist ferner bekannt, daß sich aus Aramiden Fasern mit ausgezeichneten Eigenschaften, insbesondere mit hohen Festigkeiten herstellen lassen. Verglichen mit Fasern aus aliphatischen Polyamiden weisen Aramidfasern eine erhöhte Schwerbrennbarkeit aus. Dies wird durch einen erhöhten LOI-Wert (Lowest Oxygen Index) ausgedrückt.

Für manche Einsatzgebiete ist der bislang erzielbare LOI-Wert herkömmlicher Aramide noch nicht ausreichend.

Aus der DE-A-2,062,774 ist ein Verfahren zur Modifikation von Aramiden mit Phosphonsäuredihalogeniden bekannt. Konkret beschrieben wird die Umsetzung von meta-Monomeren mit Phosphonsäurederivaten.

Gegenüber diesem Stand der Technik bestand die Aufgabe der vorliegenden Erfindung darin, Aramide bereitzustellen, die neben ausgezeichneten mechanischen Eigenschaften, wie hohen Festigkeiten, einen verbesserten LOI-Wert aufweisen.

Es wurde gefunden, daß durch den Einbau bestimmter Mengen besonderer phosphororganischer Verbindungen in die Polymerkette die hohen Festigkeitswerte der unmodifizierten Aramide praktisch erhalten bleiben, während ein deutlicher Anstieg der LOI-Werte zu vermerken ist.

Die Erfindung betrifft ein in organischen Polyamid-Lösungsmitteln lösliches aromatisches Copolyamid enthaltend mindestens 95 Mol%, bezogen auf das Polymere, an wiederkehrenden Struktureinheiten der Formeln I, II und III

$-R^1-NH-R^3-NH-$ (I),

$-R^1-NH-R^4-NH-$ (II),

$-R^1-NH-R^5-NH-$ (III),

worin ein Teil aller Reste $R^1$ eine Gruppe der Formel $-OC-R^2-CO-$ darstellt, worin $R^2$ ein zweiwertiger aromatischer Rest ist, dessen Valenzbindungen sich in para oder in vergleichbarer koaxialer oder paralleler Stellung zueinander befinden und worin ein weiterer Teil aller Reste $R^1$ eine Gruppe der Formel IV und/oder V bedeuten

```
 O                      O
 ||                     ||
-P-          (IV),     -P-R7-CO-    (V),
 |                      |
 R6                     R8
```

worin $R^6$ einen Alkyl-, Cycloalkyl- oder Arylrest bedeutet, $R^7$ einen Alkylen-, Cycloalkylen- oder Arylenrest bedeutet, und $R^8$ einen Alkyl-, Cycloalkyl- oder Arylrest bedeutet, und worin die Menge der Reste der Formel IV und/oder V innerhalb eines Polymermoleküls so gewählt wird, das der Phosphorgehalt 0,1 bis 0,5 Gew.%, bezogen auf das Polymere, beträgt,
worin $R^3$ einen zweiwertigen aromatischen Rest darstellt, dessen Valenzbindungen sich in para- oder in vergleichbarer koaxialer oder paralleler Stellung zueinander befinden,
worin $R^4$ einen Rest der Formel VI darstellt

$-Ar^1-X-Ar^2-$ (VI),

worin $Ar^1$ und $Ar^2$ unabhängig voneinander einen zweiwertigen aromatischen Rest darstellen, dessen Valenzbindungen sich in para oder in vergleichbarer koaxialer oder paralleler Stellung zueinander befinden, oder worin $Ar^2$ zusätzlich einen zweiwertigen aromatischen Rest darstellt, dessen Valenzbindungen sich in meta- oder in vergleichbarer gewinkelter Position zueinander befinden, und X eine Gruppe der Formel -O-, -S-, $-SO_2-$, -O-Phenylen-O- oder Alkylen ist, und worin $R^5$ eine der für $R^3$ und $R^4$ definierten Bedeutungen

annimmt aber von dem jeweils gewählten Rest $R^3$ und $R^4$ eines Moleküls abweicht.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über eine -CO-NH- Gruppe linear minteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallele, entgegengesetzt gerichtete Bindungen sind die Naphthalin-1,5- oder -2,6-bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C-Bindung verknüpfte aromatische Reste mit koaxialen, entgegengesetzt gerichteten Bindungen, insbesondere 4,4'-Biphenylen.

Besonders bevorzugte Reste $R^2$ und $R^3$ sind 1,4-Phenylen.

Besonders bevorzugte Reste $Ar^1$ und $Ar^2$ sind 1,4-Phenylen. $Ar^2$ ist ferner insbesondere 1,3-Phenylen.

X ist vorzugsweise -O-, $-CH_2-$ oder -O-1,4-phenylen-O-.

Bis zu 5 Mol % der Monomereinheiten, bezogen auf das Polymere, können aliphatischer oder cycloaliphatischer Natur sein oder es kann sich dabei um zweiwertige aromatische Reste handeln, deren Valenzbindungen sich in meta- oder in vergleichbarer gewinkelter Position zueinander befinden. Bei diesen letzteren Resten handelt es sich dabei um ein- oder mehrkernige aromatische Kohlenwasserstoffreste oder um heterocyclisch-aromatische Reste, die ein- oder mehrkernig sein können, Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste dieses Typs können miteinander kondensiert sein oder über C-C-Bindungen oder über Brückengruppen, wie z.B. -O-, $-CH_2-$, -S-, -CO-oder $-SO_2-$ miteinander verknüpft sein.

Beispiele für mehrkernige aromatische Reste, deren Valenzbindungen sich in meta- oder in vergleichbarer gewinkelter Position zueinander befinden, sind 1,6-Naphthylen, 2,7-Naphthylen oder 3,4'-Biphenylen. Ein bevorzugtes Beispiel für einen einkernigen aromatischen Rest dieses Typs ist 1,3-Phenylen.

Alle diese aliphatischen, cycloaliphatischen oder aromatischen Reste können mit inerten Gruppen substituiert sein. Darunter sind Substituenten zu verstehen, die die ins Auge gefaßte Anwendung, insbesondere die Schwerbrennbarkeit, des Copolymeren nicht negativ beeinflussen.

Beispiele für solche Substituenten sind Alkyl, Alkoxy oder Halogen.

Bedeuten irgendwelche Reste Alkyl, so kann es sich dabei um verzweigtes oder insbesondere um geradkettiges Alkyl handeln. Vorzugsweise handelt es sich um Alkylreste mit ein bis sechs Kohlenstoffatomen, insbesondere um Methyl.

Bedeuten irgendwelche Reste Cycloalkyl, so handelt es sich beispielsweise um Cycloalkylreste mit fünf bis acht Kohlenstoffatomen, insbesondere um Cyclohexyl.

Bedeuten irgendwelche Reste Aryl, so handelt es sich beispielsweise um ein- oder zweikernige aromatische Reste, insbesondere um Naphthyl oder um Phenyl.

Bedeuten irgendwelche Reste Halogen, so handelt es sich beispielsweise um Fluor, Brom oder insbesondere um Chlor.

Bedeuten irgendwelche Reste Alkylen, so kann es sich dabei um verzweigtes oder insbesondere um geradkettiges Alkylen handeln. Vorzugsweise handelt es sich um Alkylenreste mit zwei bis vier Kohlenstoffatomen, insbesondere um Ethylen.

Bedeuten irgendwelche Reste Cycloalkylen, so handelt es sich beispielsweise um Cycloalkylenreste mit fünf bis acht Kohlenstoffatomen, insbesondere um Cyclohexylen.

Bedeuten irgendwelche Reste Arylen, so handelt es sich beispielsweise um ein oder zweikernige aromatische Reste, insbesondere um Naphthylen oder um Phenylen, insbesondere um 1,4-Phenylen.

Die Menge der Reste der Formel IV und/oder V innerhalb eines Polymermoleküls wird vorzugsweise so gewählt, daß die Festigkeit des unmodifizierten Aramids praktisch erhalten bleibt und der LOI-Wert durch den Einbau der P-haltigen Komponente signifikant erhöht wird. Vorzugsweise beträgt der Phosphorgehalt des Polymeren 0,2 bis 0,45 Gew.%, bezogen auf das Gesamtpolymere.

Beispiele für Diaminkombinationen, die den Resten $R^3$, $R^4$ und $R^5$ in den Struktureinheiten der Formeln I, II und III zugrunde liegen, sind 1,4-Phenylendiamin, 4,4'-Diaminodiphenylmethan und 3,3'-Dichlor-, 3,3'-Dimethyl- oder 3,3'-Dimethoxybenzidin, sowie 1,4-Phenylendiamin, 1,4-Bis-(aminophenoxy)-benzol, 3,3'-Dichlor-, 3,3'-Dimethyl- oder 3,3'-Dimethoxybenzidin, sowie 1,4-Phenylendiamin, 3,4'-Diaminodiphenylether, 3,3'-Dichlor-, 3,3'-Dimethyl- oder 3,3'-Dimethoxybenzidin, sowie 1,4-Phenylendiamin, 3,4'-Diaminodiphenylether und 4,4'-Diaminobenzanilid,sowie 1,4-Phenylendiamin, 1,4-Bis-(aminophenoxy)-benzol und 3,4'-Diaminodiphenylether.

Aramide, die sich von solchen Diaminkombinationen ableiten und die sich bevorzugt gemäß der vorliegenden Erfindung mit Phosphorverbindungen modifizieren lassen, sind in den EP-A-199,090, EP-A-364,891, EP-A-394,892, EP-A-394,893 und EP-A-424,860 beschrieben.

Bevorzugt werden aromatische Copolyamide, worin $R^2$ para-Phenylen bedeutet. Bevorzugt werden aromatische Copolyamide, worin $R^3$ para-Phenylen oder einen zweiwertigen Rest des 4,4'-Diaminobenzanilids bedeutet.

Bevorzugt werden aromatische Copolyamide, worin $R^4$ einen zweiwertigen Rest des 3,4'-Diaminodiphenylethers, des 1,4-Bis-(aminophenoxy)-benzols oder des 4,4'-Diaminodiphenylmethans bedeutet.

Besonders bevorzugt werden aromatische Copolyamide, worin $R^3$ 1,4-Phenylen ist, $R^4$ einen zweiwertigen Rest des 3,4'-Diaminodiphenylethers, des 1,4-Bis-(aminophenoxy)-benzols oder des 4,4'-Diaminodiphenylmethans bedeutet und $R^5$ ein zweiwertiger Rest des 3,3'-Dichlorbenzidins, des 3,3'-Dimethylbenzidins oder des 3,3'-Dimethoxybenzidins ist.

Die erfindungsgemäßen Copolyamide werden hergestellt, indem

i) eine Mischung der Diamine der Formeln VII, VIII und IX mit Verbindungen der Formeln X und/oder XI in der Schmelze umgesetzt werden,

$H_2N\text{-}R^3\text{-}NH_2$ (VII),

$H_2N\text{-}R^4\text{-}NH_2$ (VIII),

$H_2N\text{-}R^5\text{-}NH_2$ (IX),

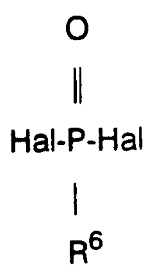

(X),

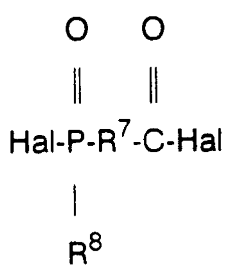

(XI),

worin $R^3$ bis $R^8$ die oben definierte Bedeutung besitzen und Hal ein Halogenatom ist, insbesondere Chlor bedeutet,

ii) die Reaktionsmischung in einem für die Polykondensation geeigneten Lösungmittel aufgelöst wird und

iii) die Verbindung der Formel XII zugegeben wird

$Cl\text{-}OC\text{-}R^2\text{-}CO\text{-}Cl$ (XII),

worin $R^2$ die oben definierte Bedeutung besitzt, und die Polykondensation in Lösung durchgeführt wird.

Das Dicarbonsäuredichlorid der Formel XII und die einzelnen Diamin- bzw. phosphororganische Verbindungstypen können auch in Form von Mischungen eingesetzt werden.

Die Mengenverhältnisse der Diamine VII, VIII und IX sind dabei jeweils so zu wählen, daß Polyamide entstehen, die in organischen Polyamid-Lösungsmitteln löslich sind. Sollten im Einzelfall unlösliche Copolyamide entstehen, so ist der Anteil der flexiblen Diaminkomponente der Formel VIII und gegebenenfalls IX zu erhöhen.

Es ist für den Fachmann selbstverständlich, daß die Summe aller von Dihalogenverbindungen abgeleiteten Struktureinheiten und die Summe aller von aromatischen Aminen abgeleiteten Struktureinheiten im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Das Molekulargewicht der entstehenden Polyamide läßt sich unter anderem über die Auswahl der Mengenverhältnisse von Dihalogenverbindungen zu Aminen steuern. Diese Auswahlkriterien sind dem Fachmann auf dem Gebiet der Polykondensation bekannt.

Beispiele für geeignete aromatische Dicarbonsäuren, von denen sich die Dicarbonsäuredichloride der Formel XII ableiten, sind Naphthalin-1,4-dicarbonsäure, Naphthalin-1,5-dicarbonsäure, Naphthalin-2,6-dicarbonsäure, Biphenyl-4,4'-dicarbonsäure, 2-Chlorterephthalsäure, 2-Bromterephthalsäure, 2-Methylterephthalsäure und insbesondere Terephthalsäure.

Bis zu 5 Mol-% der Dicarbonsäuredichloride können sich auch von zweiwertigen aromatischen meta-Resten, zweiwertigen aliphatischen oder zweiwertigen cycloaliphatischen Resten ableiten. Beispiele für Säuren, von denen sich solche Dicarbonsäuredichloride ableiten, sind Naphthalin-1,6-dicarbonsäure, Naphthalin-1,7-dicarbonsäure, Naphthalin-2,7-dicarbonsäure, Biphenyl-3,4'-dicarbonsäure, Adipinsäure, Sebacinsäure, 1,4-Cyclohexandicarbonsäure und insbesondere Isophthalsäure. Bis zu 5 Mol % der Diaminreste können sich und von zweiwertigen aromatischen meta-Resten, zweiwertigen aliphatischen oder zweiwertigen cycloaliphatischen Resten ableiten. Beispiele für geeignete Diamine sind Ethylen-, Tetramethylen- oder Hexamethylendiamin, 1,4-Diaminocyclohexan, Naphthalin-1,6-, -1,7- oder -2,7-diamin und insbesondere 1,3-Phenylendiamin. Die Gesamtmenge der voranstehend erwähnten Säure- und Aminkomponenten kann bis zu 5 Mol%, bezogen auf das Gesamtpolymere, betragen.

Beispiele für geeignete Diamine der Formel VII und gegebenenfalls IX sind Naphthalin-1,4-diamin, Naphthalin-1,5-diamin, Naphthalin-2,6-diamin und insbesondere p-Phenylendiamin.

Beispiele für geeignete Diamine der Formel VIII und gegebenenfalls IX sind 3,4'-Diaminodiphenylether, 4,4'-Diaminodiphenylmethan, 4,4'-Diaminodiphenylsulfid und 1,4-Bis-(4'-aminophenoxy)-benzol.

Beispiele für geeignete phosphororganische Verbindungen der Formel X und XI sind Phenylphosphonsäuredibromid oder insbesondere -chlorid oder die entsprechenden Methylphosphonsäuredihalogenide sowie (Chlor-carboxy-ethylen)-phenylphosphonsäurechlorid oder die entsprechenden Bromderivate oder (Chlor-carboxy ethylen)-methylphosphonsäurechlorid, sowie die entsprechenden Bromderivate.

Die Umsetzung der Phosphorverbindungen der Formel X und/ oder XI wird zusammen mit den Diaminen der Formel VII, VIII und IX sowie gegebenenfalls geringen Mengen an aliphatischen, cycloaliphatischen oder meta-Diaminen in der Schmelze durchgeführt. Dazu gibt man die Diamine in der für die spätere Polykondesation benötigten Menge im Überschuß mit den Phosphorverbindungen zusammen und läßt durch Erhitzen abreagieren.

Die Copolymerisation der oben beschriebenen Reaktionsmischung mit den Dicarbonsäuredichloriden wird als Lösungspolymerisation ausgeführt.

Dazu werden die Reaktionsmischung und die Dicarbonsäuredichloride in der Regel in einem organischen Lösungsmittel gelöst. Das organische Lösungsmittel enthält dabei vorzugsweise zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen von Bedeutung.

Bei einer bevorzugten Form der Durchführung der Lösungspolymerisation wird die Reaktionsmischung in einem Amid-Lösungsmittel gelöst. Die so erhaltene Lösung wird dann mit mindestens einer aromatischen monomeren Verbindung in Form eines aromatischen Dicarbonsäuredihalogenids unter heftigem Umrühren gemischt, um die Copolymerisation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolymerisation der aromatischen monomeren Verbindungen entsteht. In einigen Fällen kann es vorteilhaft sein, einen die

Löslichkeit fördernden Zusatzstoff zu verwenden, beispielsweise ein Metallhalogenid eines der Metalle der Gruppe I oder II des periodischen Systems, welches der Copolymerisationsmischung vor, während oder nach der Copolymerisation zugesetzt wird.

Beispiele für solche Zusatzstoffe sind Alkalimetallhalogenide, wie Lithiumchlorid oder Erdalkalimetallhalogenide, wie Kalziumchlorid.

Die Polykondensationstemperaturen liegen bei der Lösungspolymerisation üblicherweise zwischen -20 °C und +120 °C, bevorzugt zwischen +10 °C und +100 °C. Besonders gute Ergebnisse werden bei Reaktionstemperaturen zwischen +10 °C und +80 °C erzielt.

Die Reaktionstemperaturen der vorliegenden Umsetzung in der Schmelze liegen üblicherweise bei 120 bis 150 °C.

Die Summe der Konzentrationen der monomeren Verbindungen in der Polymerisationsgemischlösung kann unter Beachtung des gewünschten Polymerisationsgrades, der gewünschten Viskosität des Polymerisationsgemisches, der Art der verwendeten monomeren Verbindungen, der Art des verwendeten Lösungsmittels und der gewünschten Polymerisationstemperatur eingestellt werden. Die günstigste Summe der Konzentrationen kann dabei aufgrund einer Reihe von Vorversuchen für den Ablauf der Polymerisation ermittelt werden.

Polykondensationsreaktionen werden vorzugsweise so ausgeführt, daß nach Abschluß der Reaktion 2 bis 15, vorzugsweise 5 bis 12 Gew.-% an Polykondensat in der Lösung vorliegen. Besonders gute Ergebnisse werden bei Konzentrationen von 5,0 bis 8 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von mehr als 4,0, vorzugsweise mehr als 4,5 dl/g, insbesondere 5,0 bis 6,5 dl/g entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wird für die Zwecke der vorliegenden Erfindung bestimmt an Lösungen von jeweils 0,25 % Polymer in N-Methylpyrrolidon bei 25 °C.

Das skizzierte Verfahren zur Herstellung von aromatischen Polyamiden ist, soweit es zur Herstellung der oben beschriebenen erfindungsgemäßen aromatischen Polyamide dient, ebenfalls Gegenstand der Erfindung.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend kann der entstandene und salzartig an das Amidlösungsmittel gebundene Chlorwasserstoff durch Zugabe basischer Substanzen neutralisiert werden.

Geeignet sind dafür beispielsweise Lithiumhydroxyd, Calciumhydroxyd, insbesondere aber Calciumoxid.

Das bei Durchführung des erfindungsgemäßen Verfahrens erhaltene aromatische Copolyamid kann aus dem Copolymerisationsgemisch durch ein Trennverfahren abgeschieden werden, beispielsweise durch Präzipitation. Zur Herstellung einer Lösung für das Ausformen des Copolyamids wird das so gewonnene aromatische Copolyamid dann in einem geeigneten organischen Lösungsmittel gelöst, wobei dieses Verfahren als Auflösungsverfahren zur Herstellung der Ausformlösung bezeichnet wird.

In den Fällen, in denen zur Herstellung des aromatischen Copolyamids gemäß der Erfindung das Verfahren der Lösungspolymerisation angewandt wird, wird das Copolyamid, weil es in dem Lösungsmittel für die Polymerisation hervorragend löslich ist, in diesem jedoch vollständig gelöst. Daher ist es bei industriellem Einsatz des erfindungsgemäßen Verfahrens vorteilhaft, daß bei der Polymerisation erhaltene Gemisch sofort als Ausformlösung für das aromatische Copolyamid zu verwenden.

Das aromatische Copolyamid gemäß der Erfindung ist in einem organischen Lösungsmittel, beispielsweise in organischen Lösungsmitteln vom Amidtyp hervorragend löslich und besitzt eine hervorragende Schwerbrennbarkeit, einen erhöhten LOI-Index und eine überlegene chemische Widerstandsfähigkeit. Das erfindungsgemäße aromatische Copolyamid ist besonders nützlich für die Herstellung von verschiedenen

geformten Artikeln, beispielsweise Fasern, Filmen und Beschichtungen, die ebenfalls ein Gegenstand der Erfindung sind.

Der Begriff "Fasern" ist im Rahmen dieser Beschreibung in seiner breitesten Bedeutung zu verstehen; dazu zählen also zum Beispiel Filamente oder Stapelfasern beliebiger Titer.

Der Begriff "Filme" ist im Rahmen dieser Beschreibung ebenfalls in seiner breitesten Bedeutung zu verstehen; dazu zählen also zum Beispiel Ausführungsformen unterschiedlicher Stärke, wie Folien oder Membranen.

Die geformten Gebilde besitzen nicht nur eine hervorragende Wärmebeständigkeit und chemische Beständigkeit, sondern weisen auch überlegene mechanische Eigenschaften auf, beispielsweise hinsichtlich der Zugfestigkeit, der Abriebfestigkeit und des Elastizitätsmoduls. Die Lösung des aromatischen Copolyamids kann ebenfalls auf unterschiedliche Weise verwendet werden, beispielsweise zur Produktion von Fasern, Folien, blattförmigen Elementen, Faserstoffen und anderen geformten Artikeln.

Bei dem Verfahren zum Herstellen der Ausformlösung des aromatischen Copolyamids wird als Lösungsmittel vorzugsweise ein Lösungsmittel vom Amidtyp verwendet, insbesondere die weiter obengenannten Lösungsmittel vom Amidtyp, bzw. eine Mischung von zwei oder mehr der genannten Verbindungen.

Für die Herstellung der Ausformlösung ist es vorteilhaft, wenn die Konzentration des aromatischen Copolyamids in einem Bereich zwischen 4 und 15 Gew.-%, insbesondere zwischen 5 und 12 Gew.-% gehalten wird. Wenn es erforderlich ist, kann die Ausformlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Calciumchlorid oder Magnesiumbromid, und zwar in einer Konzentration zwischen 0,2 und 10 %, vorzugsweise zwischen 0,5 und 5 %, bezogen auf das Gesamtgewicht der Ausformlösung. Der Zusatzstoff zur Förderung der Löslichkeit fördert dabei auch die Stabilität der Ausformlösung bei erhöhter Temperatur.

Das Ausformen der Ausformlösung zu einem geformten Artikel kann nach jedem geeigneten Trockenverfahren, Naßverfahren oder Trocken-Naßverfahren erfolgen. In den Fällen, in denen ein Naßverfahren angewandt wird, um die Ausformlösung beispielsweise zu Filamenten auszuformen, wird die Ausformlösung oder - in diesem Fall - die Spinnlösung durch eine Düse, beispielsweise eine Spinndüse, in eine koagulierende Flüssigkeit extrudiert. Dabei ist es gewöhnlich vorteilhaft, wenn die Koagulationsflüssigkeit aus Wasser oder aus einer wäßrigen, ein polares organisches Lösungsmittel enthaltenden Lösung besteht. Dabei kann das polare organische Lösungsmittel unter denselben Amid-Lösungsmitteln ausgewählt werden, die gewöhnlich für das Lösen des aromatischen Copolyamids verwendet werden.

Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0 °C und der Siedetemperatur der Koagulationsflüssigkeit bei Atmosphärendruck eingesetzt.

Das polare organische Lösungsmittel liegt in der Koagulationsflüssigkeit vorzugsweise in einer Konzentration von weniger als 70 Gew.-%, insbesondere weniger als 50 Gew.-% vor.

Das vorstehend erläuterte Ausformverfahren ist besonders für die Herstellung von Filmen oder Fasern aus einer Ausformlösung geeignet.

Bei der Herstellung von Fasern aus dem aromatischen Copolyamid wird die Ausform- bzw. Spinnlösung durch einen Spinnkopf mit mehreren Spinnöffnungen extrudiert, wobei die filamentförmigen Ströme der Spinnlösung in einer der oben angegebenen Koagulationsflüssigkeiten verfestigt werden (Naßverfahren) oder in einer die Verdampfung fördernden Atmosphäre (Trockenverfahren). Eine ebenfalls geeignete Variante ist das sogenannte "Trockendüsen-Naßspinnverfahren", wie es z.B. in der US-A-34 14 645 beschrieben ist. Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt.

Beim Naßspinnen eines aromatischen Copolyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filamente des aromatischen Copolyamids in ein Wasserbad eingeleitet werden, welches auf einer Temperatur zwischen 0 und 100 °C gehalten wird.

Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filamenten ausgewaschen.

Aus der vorstehenden Beschreibung wird deutlich, daß das erfindungsgemäße aromatische Copolyamid unter Verwendung üblicher Spinnverfahren und- vorrichtungen ohne weiteres zu Filamenten verarbeitet

werden kann, ohne daß ein gefährliches oder schädliches Lösungsmittel, wie z.B. konzentrierte Schwefelsäure, verwendet werden müßte.

Hierdurch werden die Gefahren für das Bedienungspersonal verringert. Außerdem haben die aus dem erfindungsgemäßen Copolyamid hergestellten Filamente eine dichte interne Struktur.

Die Ausformlösung kann auch unter Verwendung üblicher Auffächerungs- oder Extrudierverfahren zu einem Film verarbeitet werden.

Fasern oder Filme, die nach den vorstehend angegebenen Ausformverfahren hergestellt werden, werden gewöhnlich einem Streckvorgang unterworfen, durch den nicht nur die mechanischen Eigenschaften, wie z.B. die Zugfestigkeit und der Elastizitätsmodul, gefördert werden.

Filamente aus den erfindungsgemäßen aromatischen Copolyamiden werden in der Regel verstreckt, um eine hohe mechanische Festigkeit und einen hohen Elastizitätsmodul zu erzielen. Das Verstreckungsverhältnis beträgt dabei üblicherweise etwa 1:6 bis 1:20. Die Verstrecktemperatur liegt dabei in der Regel zwischen 250 und 500 °C, vorzugsweise zwischen 300 und 480 °C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente oder Folien einer weiteren Wärmebehandlung bei gleicher oder höherer Temperatur unterworfen werden, um ihre kristalline Struktur zu fördern. In diesem Zusammenhang sei darauf hingewiesen, daß das aromatische Copolyamid gemäß der Erfindung nicht nur hinsichtlich seiner Lösbarkeit in üblichen organischen Lösungsmitteln überraschend vorteilhaft ist, sondern nach der Herstellung der Fasern oder Filme ohne weiteres unter "milden" Arbeitsbedingungen verstreckt werden kann.

Die Fasern aus aromatischen Copolyamiden gemäß der Erfindung, welche hervorragende mechanische und thermische Eigenschaften besitzen und sich durch eine hohe Verstreckbarkeit auszeichnen, können auf die verschiedenste Weise industriell eingesetzt werden, beispielsweise zur Verstärkung von Kunststoffen, insbesondere als Verstärkungsmaterialien für die Gewebeeinlagen von Autoreifen und anderen Gummiartikeln, als wärmebeständige Isolationsmaterialien, zur Herstellung von Filterstoffen, insbesondere von Filtergeweben, und als leichte Dämmstoffe. Filme aus aromatischen Copolyamiden gemäß der Erfindung können insbesondere als wärmebeständige elektrische Isolationsmaterialien eingesetzt werden, vor allem zur Herstellung von Membranen, beispielsweise als Trägermaterial für Trennmembranen.

Weitere Eigenschaften und Vorteile der Erfindung werden nachstehend anhand von Beispielen noch näher erläutert.

Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

Folgende Abkürzungen wurden in den Beispielen verwendet:

| | |
|---|---|
| PPD | p-Phenylendiamin |
| OTD | o-Tolidin |
| BAPOB | 1,4-Bis-(4'-aminophenoxy)-benzol |
| TPC | Terephthalsäuredichlorid |
| CaO | Calciumoxid |
| CAMIS | Carboxy-ethylmethyl-phosphinsäuredichlorid. |

Beispiel V1 (Vergleichsbeispiel)

Aromatisches Copolyamid aus 100 Mol-% TPC 50 Mol-% OTC, 25 Mol-% BAPOB und 25 Mol-% PPD.

42,4 g (0.2 Mol) trockenes OTC, 29,2 g trockenes (0,1 Mol) BAPOB, 10,8 g (0,1 Mol) trockenes p-Phenylendiamin werden unter Stickstoff in 2.100 g N-Methylpyrrolidon gelöst und zwischen 11 °C und 65 °C innerhalb von 65 Minuten 82,4 g (0,406 Mol) TPC zugegeben. Die viskose Lösung wurde 40 Minuten lang bei 68 °C nachgerührt und mit 24,5 g CaO (96%ig) neutralisiert und weitere 30 Minuten bei 70 °C nachgerührt.

Das gelöste Copolyamid hat eine inhärente Viskosität von 5,70.

Die Lösung wurde filtriert, entgast und naß versponnen. Dazu wurde sie aus einer Düse mit 100 Öffnungen von jeweils 0,15 mm Durchmesser in ein waagerecht angeordnetes Koagulationsbad, bestehend aus einer 80 °C warmen Lösung von 35% N-Methylpyrrolidon in Wasser, mit einer Geschwindigkeit von 16 m/min ausgesponnen. Die erhaltenen Fäden wurden durch zwei Wasserbäder, eine Waschmaschine, über eine Trockengalette und schließlich über ein Bügeleisen mit einer Temperatur von 400 °C mit einer Geschwindigkeit von 128 m/min abgezogen.

Der Einzelfilamenttiter beträgt 1,78 dtex bei einer Feinheitsfestigkeit von 179 cN/tex, einer Dehnung von 3,1 % und einem Anfangsmodul von 59 N/tex, bezogen auf 100 % Dehnung. Der Anfangsmodul wird dabei aus dem Kraft-Dehnungsdiagramm gewonnen und auf eine Dehnung von 100 % normiert. Der LOI dieser Filamente weist einen Wert von 28 auf.

## Beispiel 1

10,8 g (0,1 Mol) PPD, 42,4 g (0,2 Mol) OTD, 36,8 g (0,1 Mol) BAPOB werden unter Inertgas in einem Rundkolben vorgelegt und 2,5 Mol % CAMIS, bezogen auf die $NH_2$-Endgruppen, zugesetzt. Diese Mischung wird auf 150 ° C für wenige Minuten erhitzt und anschließend auf Raumtemperatur abgekühlt.

Die weitere Vorgehensweise entspricht der Beschreibung im Vergleichsbeispiel 1. Das gelöste Copolyamid hat eine inhärente Viskosität von 6,50. Die Lösung wurde anschließend naß versponnen.

Dazu wird sie aus einer Düse mit 100 Öffnungen von jeweils 0,15 mm Durchmesser in ein Koagulationsbad bestehend aus einer 80 ° C warmen Lösung von 35% N-Methylpyrrolidin in Wasser mit einer Geschwindigkeit von 16,0 m/min ausgesponnen. Die erhaltenen Fäden werden durch zwei Wasserbäder, eine Waschmaschine, über eine Trockengalette und schließlich über ein Bügeleisen der Temperatur von 400 ° C auf das 6,2-fache verstreckt.

Der Einzelfilamenttiter beträgt 1,95 dtex bei einer feinheitsbezogenen Festigkeit von 132 cN/tex, eine Dehnung von 2,6% und einem Anfangsmodul von 50 N/tex, bezogen auf 100% Dehnung. Im Faden werden 0,23 Gew.-% Phosphor nachgewiesen. Der LOI dieser Filamente weist einen Wert von. 30 auf.

## Beispiel 2

Nach der im Beispiel 1 beschriebenen Arbeitsweise wurde auch Beispiel 2, wobei lediglich der Anteil an CAMIS variiert wurde (5 Mol % betrug, anstelle 2,5 Mol % aus Beispiel 1), hergestellt. Das gelöste Copolyamid hat eine inhärente Viskosität von 6,50. Die Lösung wird filtriert, entgast und naß versponnen. Dazu wird sie aus einer Düse mit 100 Öffnungen von jeweils 0,15 mm Durchmesser in ein Koagulationsbad, bestehend aus einer 80 ° C warmen Lösung von 35% N-Methylpyrrolidon in Wasser mit einer Geschwindigkeit von 16,0 m/min ausgesponnen. Die erhaltenen Fäden werden durch zwei Wasserbäder, eine Waschmaschine, über eine Trockengalette und schließlich über ein Bügeleisen der Temperatur von 400 ° C auf das 10,8-fache verstreckt.

Der Einzelfilamenttiter beträgt 0,87 dtex bei einer feinheitsbezogenen Festigkeit von 110 cN/tex, eine Dehnung von 2,2% und einem Anfangsmodul von 53 N/tex, bezogen auf 100% Dehnung.
Im Festkörper wurden 0,45 dtex gefunden.
Der LOI-Wert dieser modifizierten Filamente beträgt 32.

## Beispiel 3

Analog der Arbeitsweise aus Beispiel 1 wurde Beispiel 3 hergestellt, wobei lediglich als P-Komponente Benzol-phosphonsäure-dichlorid (2,5 Mol %) eingesetzt wurde. Das gelöste Copolyamid hat eine inhärente Viskosität von 6,50. Die Lösung wird filtriert, entgast und naß versponnen. Dazu wird sie aus einer Düse mit 100 Öffnungen von jeweils 1 mm Durchmesser in ein Koagulationsbad, bestehend aus einer 80 ° C warmen Lösung von 35% N-Methylpyrrolidon in Wasser mit einer Geschwindigkeit von 16,0 m/min ausgesponnen. Die erhaltenen Fäden werden durch zwei Wasserbäder, eine Waschmaschine, über eine Trockengalette und schließlich über ein Bügeleisen der Temperatur von 400 ° C auf das 8,4-fache verstreckt.

Der Einzelfilamenttiter beträgt 1,77 dtex bei einer feinheitsbezogenen Festigkeit von 114 cN/tex, eine Dehnung von 2,3% und einem Anfangsmodul von 49 N/tex, bezogen auf 100% Dehnung.

Der P-Gehalt im ausgefüllten Polymer betrug 0,23 Gew.-% und die Filamente hatten einen LOI-Wert von 29.

## Beispiel 4

In Anlehnung an Beispiel 3 wurde Beispiel 4 hergestellt, wobei insgesamt 5 Mol% Benzolphosphonsäuredichlorid zugesetzt wurden. Das gelöste Copolyamid hat eine inhärente Viskosität von 6,90. Die Spinnlösung wurde anschließend naß versponnen.

Dazu wurde sie aus einer Düse mit 300 Öffnungen von jeweils 0,15 mm Durchmesser in ein Koagulationsbad, bestehend aus einer 80 ° C warmen Lösung von 35% N-Methylpyrrolidon in Wasser mit einer Geschwindigkeit von 16,0 m/min ausgesponnen.

Die erhaltenen Fäden wurden durch zwei Wasserbäder, eine Waschmaschine, über eine Trockengalette und schließlich über ein Bügeleisen der Temperatur von 410 °C auf das 6,2-fache verstreckt.

Der Einzelfilamenttiter betrug 569 dtex bei einer feinheitsbezogenen Festigkeit von 68 cN/tex, eine Dehnung von 1,9% und einem Anfangsmodul von 40 N/tex, bezogen auf 100% Dehnung.

Der Phosphor-Gehalt im Polymeren lag bei 0,45 Gew.-% und der LOI der Filamente wies einen Wert von 35 aus.

**Patentansprüche**

**1.** In organischen Polyamid-Lösungsmitteln lösliches aromatisches Copolyamid enthaltend mindestens 95 Mol%, bezogen auf das Polymere, an wiederkehrenden Struktureinheiten der Formeln I, II und III

$-R^1-NH-R^3-NH-$ (I),

$-R^1-NH-R^4-NH-$ (II),

$-R^1-NH-R^5-NH-$ (III),

worin ein Teil aller Reste $R^1$ eine Gruppe der Formel $-OC-R^2-CO-$ darstellt, worin $R^2$ ein zweiwertiger aromatischer Rest ist, dessen Valenzbindungen sich in para oder in vergleichbarer koaxialer oder paralleler Stellung zueinander befinden und worin ein weiterer Teil aller Reste $R^1$ eine Gruppe der Formel IV und/oder V bedeuten

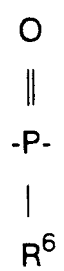 (IV), 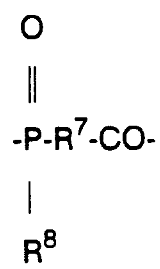 (V),

worin $R^6$ einen Alkyl-, Cycloalkyl- oder Arylrest bedeutet, $R^7$ einen Alkylen-, Cycloalkylen- oder Arylenrest bedeutet, und $R^8$ einen Alkyl-, Cycloalkyl- oder Arylrest bedeutet, und worin die Menge der Reste der Formel IV und/oder V innerhalb eines Polymermoleküls so gewählt wird, das der Phosphorgehalt 0,1 bis 0,5 Gew.%, bezogen auf das Polymere, beträgt,
worin $R^3$ einen zweiwertigen aromatischen Rest darstellt, dessen Valenzbindungen sich in para oder in vergleichbarer koaxialer oder paralleler Stellung zueinander befinden,
worin $R^4$ einen Rest der Formel VI darstellt

$-Ar^1-X-Ar^2-$ (VI),

worin $Ar^1$ und $Ar^2$ unabhängig voneinander einen zweiwertigen aromatischen Rest darstellen, dessen Valenzbindungen sich in para oder in vergleichbarer koaxialer oder paralleler Stellung zueinander befinden, oder worin $Ar^2$ zusätzlich einen zweiwertigen aromatischen Rest darstellt, dessen Valenzbindungen sich in meta- oder in vergleichbarer gewinkelter Position zueinander befinden, und X eine Gruppe der Formel -O-, -S-, $-SO_2-$, -O-Phenylen-O- oder Alkylen ist, und worin $R^5$ eine der für $R^3$ und $R^4$ definierten Bedeutungen annimmt aber von dem jeweils gewählten Rest $R^3$ und $R^4$ eines Moleküls abweicht.

**2.** Aromatisches Copolyamid gemäß Anspruch 1, dadurch gekennzeichnet, daß $R^6$ Phenyl ist.

**3.** Aromatisches Copolyamid gemäß Anspruch 1, dadurch gekennzeichnet, daß $R^7$ $C_2$ bis $C_4$ Alkylen, insbesondere Ethylen ist und daß $R^8$ Methyl ist.

**4.** Aromatisches Copolyamid gemäß Anspruch 1, dadurch gekennzeichnet, daß die Menge der Reste der Formel IV und/oder V innerhalb eines Polymermoleküls so gewählt wird, das der Phosphorgehalt 0,2 bis 0,45 Gew.%, bezogen auf das Polymere, beträgt.

**5.** Aromatisches Copolyamid gemäß Anspruch 1, dadurch gekennzeichnet, daß $R^2$ 1,4-Phenylen bedeutet.

**6.** Aromatisches Copolyamid gemäß Anspruch 1, dadurch gekennzeichnet, daß $R^3$ 1,4-Phenylen oder einen zweiwertigen Rest des 4,4'-Diaminobenzanilids bedeutet.

**7.** Aromatisches Copolyamid gemäß Anspruch 1, dadurch gekennzeichnet, daß $R^4$ einen zweiwertigen Rest des 3,4'-Diaminodiphenylethers, des 1,4-Bis-(aminophenoxy)-benzols oder des 4,4'-Diaminodiphenylmethans bedeutet.

**8.** Aromatisches Copolyamid gemäß Anspruch 1, dadurch gekennzeichnet, daß $R^3$ 1,4-Phenylen ist, $R^4$ einen zweiwertigen Rest des 3,4'-Diaminodiphenylethers, des 1,4-Bis-(aminophenoxy)-benzols oder des 4,4'-Diaminodiphenylmethans bedeutet und $R^5$ ein zweiwertiger Rest des 3,3'-Dichlorbenzidins, des 3,3'-Dimethylbenzidins oder des 3,3'-Dimethoxybenzidins ist.

**9.** Verfahren zur Herstellung des aromatischen Copolyamids gemäß Anspruch 1 umfassend die Schritte
i) Umsetzung einer Mischung der Diamine der Formeln VII, VIII und IX mit Verbindungen der Formeln X und/oder XI in der Schmelze,

$H_2N-R^3-NH_2$ (VII),

$H_2N-R^4-NH_2$ (VIII),

$H_2N-R^5-NH_2$ (IX),

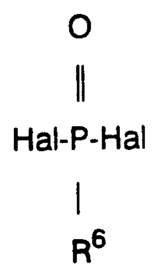

(X),

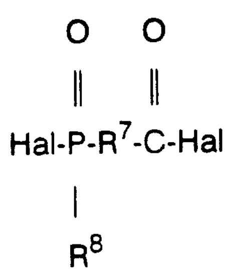

(XI),

ii) Auflösen der Reaktionsmischung in einem für die Polykondensation geeigneten Lösungmittel und
iii) Zugabe der Verbindung der Formel XII

$Cl-OC-R^2-CO-Cl$ (XII),

und Polykondensation zum aromatischen Copolyamid in Lösung, worin die Reste $R^2$ bis $R^8$ die in Anspruch 1 definierte Bedeutung besitzen und Hal ein Halogenatom ist.

**10.** Geformte Artikel, insbesondere Fasern, Filme oder Beschichtungen, aus aromatischen Copolyamiden gemäß Anspruch 1.

**11.** Verwendung von Fasern aus aromatischen Copolyamiden gemäß Anspruch 1 zur Verstärkung von Kunststoffen, insbesondere zur Verstärkung von Elastomeren, als Isolationsmaterialien oder Dämmstoffe oder zur Herstellung von Filterstoffen.

**12.** Verwendung von Filmen aus aromatischen Copolyamiden gemäß Anspruch 1 als elektrische Isolationsmaterialien oder zur Herstellung von Membranen.